Europäisches Patentamt

European Patent Office

Office européen des brevets

(11) Publication number: **0 416 958 A1**

## EUROPEAN PATENT APPLICATION

(21) Application number: 90309873.9

(22) Date of filing: 10.09.90

(51) Int. Cl.5: **G07F 7/10**

(30) Priority: 08.09.89 GB 8920346

(43) Date of publication of application:
13.03.91 Bulletin 91/11

(84) Designated Contracting States:
**DE ES FR GB IT NL SE**

(71) Applicant: **FORTRONIC LIMITED**
**3/5 Burlington Gardens**
**London W1A 1DL(GB)**

(72) Inventor: **Chapman, William**
**Chestnut House, Green Road**
**Kinross, Fife, KY13 7TU(GB)**

(74) Representative: **Skone James, Robert Edmund**
**et al**
**GILL JENNINGS & EVERY 53-64 Chancery**
**Lane**
**London WC2A 1HN(GB)**

(54) IC card processing system.

(57) An IC Card Processing System for writing transaction data into the memory of an IC card comprises a plurality of IC cards each having a memory (12). At least one IC card processing device including an IC card holder (11) is provided together with a processor and coupling means for connecting the processor to an IC card in the holder (11) so that transaction information can be stored in the memory (12) of the IC card. Each processing device has a unique identifier and transaction data can only be written from the processor to an IC card if the IC card holds the same identifier.

Fig.1

## IC CARD PROCESSING SYSTEM

The invention relates to an IC card processing system for writing transaction data into the memory of an IC card.

At present, when the holder of a credit or charge card wishes to purchase items he presents the card to the retailer who then places the card into a manual imprinter underneath a record slip. The retailer then runs a pressure member across the slip and card causing information embossed on the card to transfer onto the record slip. The record slip is filled in manually and then signed by the customer. At the end of the day the retailer has to reconcile all the slips which have been completed and forward them to his bank. This is a time consuming process and runs the risk of losing slips of paper and so on.

It has been proposed, for example in US-A-4804825, to store the transaction information in the memory of an IC card (that is a card which incorporates at least a memory and, in the case of smart cards, additionally a microprocessor. This has the advantage of reducing the amount of paper involved and simplifying the procedure by which the retailer notifies the bank of the transactions. Typically, the IC card is mounted to a processing device which causes the transaction details to be transferred into the memory on the IC card. When the IC card is full or at the end of the day the card is removed from the processing device and forwarded to the bank for down loading of the information.

One of the problems with this type of system is that inadvertently or fraudulently IC cards may be used to store transaction data from more than one processing device. This could lead to considerable difficulties when processing the data.

In accordance with the present invention, an IC card processing system for writing transaction data into the memory of an IC card comprises a plurality of IC cards each having a memory; and at least one IC card processing device including an IC card holder, a processor responsive to operator instructions, and coupling means for connecting the processor to an IC card in the holder so that transaction information can be stored in the memory of the IC card, wherein each processing device has a unique identifier and wherein the processor can only write transaction data to an IC card if the IC card memory holds the same identifier.

This invention deals with the problem mentioned above by allotting unique identifiers to each processing device and only permitting transaction data to be written to an IC card if the card holds the same identifier. Thus, if a card holding the identifier corresponding to one processing device is mounted to another processing device, transaction data will not be written due to the difference in identifiers.

The identifier may comprise a serial number or other code.

Although it would be possible for the IC card issuing institution to preload the cards with appropriate identifiers, it is preferred that when the processor determines that the IC card holds no identifier in its memory then the identifier of the processing device is written into the memory.

Preferably, the IC card processing device includes a reading device for reading data relating to a customers details stored on a data carrier. For example, the device may include a swipe reader for reading data stored on a magnetic tape bonded to a plastic card or may comprise an IC card reader for reading data from the memory of an IC card such as a memory or smart card.

In addition, the device preferably further includes a printing system for printing transaction details on a record medium such as paper so as to provide a permanent record for the customer and, if appropriate, the retailer.

An example of an electronic imprinter according to the invention will now be described with reference to the accompanying drawings, in which:-

Figure 1 is a plan;

Figure 2 is a bottom plan with the battery cover withdrawn.

Figure 3 is a block diagram of the components of a memory card; and,

Figure 4 is a block diagram of the electronic imprinter components.

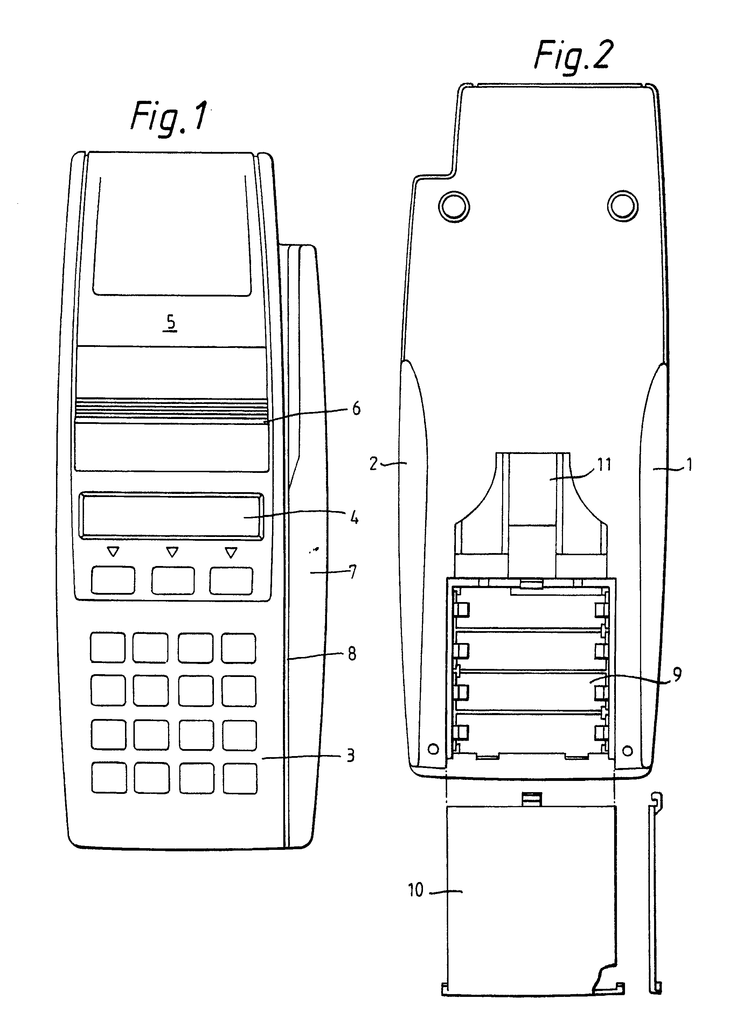

The imprinter shown in Figures 1 and 2 is for hand held use and is designed so as to fit comfortably into the operator's hands. The underside of the imprinter body is scalloped along its sides 1,2 to allow a hand to fit comfortably around the body. The upper surface of the imprinter shown in Figure 1 includes a keyboard 3, an LCD display 4 and a planar section 5 over which a length of paper passes in use from a supply spool (not shown) mounted within the body past a printer 6. Alongside the main part of the body is provided a SWIPE reader 7 forming part of a channel 8 extending along a majority of the one side of the imprinter body.

The imprinter is powered by four batteries which are mounted in a support housing 9 on the underside of the body (Figure 2), the housing being closed by a sliding door 10. Transaction information is stored in the memory of an IC memory card (not shown) mounted in a slot 11 on the underside of the body.

The construction of the memory card is of a conventional form having dimensions similar to those of a conventional credit card but with a semiconductor memory 12 coupled to an I/O device 13 which in turn is coupled to externally mounted contacts on the card. When the card is inserted into the slot 11, the contacts on the card will engage corresponding contacts within the slot so as to couple the card with the processor within the device.

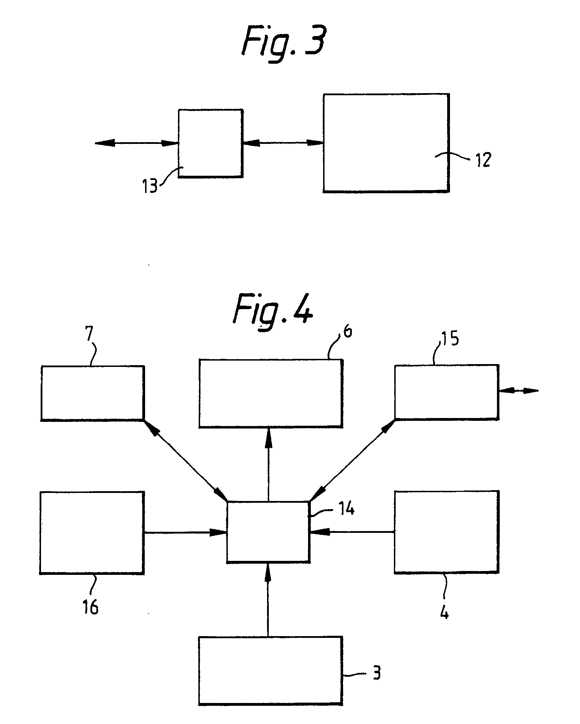

Figure 4 illustrates in block diagram form the components provided within the device. A microprocessor 14 is coupled with an I/O device 15 which in turn is coupled with the contacts in the slot 11. The printer 6 and the swipe reader 7 are each connected to the microprocessor 14 as is the keyboard 3 and the LCD display 4. In addition to the usual memories for software and the like provided within the microprocessor 14, an additional store 16 is provided for storing a unique identifier for this imprinter. Of course, the store 16 may form part of one of the other stores within the microprocessor.

In operation, the retailer initially loads a memory card into the slot 11. The memory or store 12 will at this stage be blank. The microprocessor 14 then addresses that part of the store 12 which should contain the identifier and will find that no identifier has been stored. Consequently, it will cause the identifier stored in the store 16 to be written into the appropriate portion of the store 12.

The system is now ready for use and when a customer wishes to purchase a product, he hands his charge or credit card to the retailer who runs it along the channel 8 so as to read the data stored on a magnetic stripe bonded to the card and defining the card holders details. The retailer then keys in the transaction information following the instructions displayed on the LCD display 4. Once all the information has been entered, the microprocessor causes the information to be printed out on paper by suitably controlling the printer 6 and at the same time stores the transaction data in the store 12 of the memory card.

At some point (for example when the memory card store 12 is full or at the end of the day) the retailer will remove the memory card from the slot 11 and send it to his bank.

If upon insertion of a new memory card into the slot 11, the microprocessor 14 finds that a serial number is already stored in the store 12 it will compare that serial number with the number stored in the store 16. If they are the same then it will permit further transactions to be recorded. However, if the serial numbers are different it will prevent any transaction information being stored and will issue a warning on the LCD display 4.

## Claims

1. An IC card processing system for writing transaction data into the memory of an IC card, the system comprising a plurality of IC cards each having a memory (12); and at least one IC card processing device including an IC card holder (11), a processor responsive to operator instructions, and coupling means for connecting the processor to an IC card in the holder so that transaction information can be stored in the memory of the IC card, wherein each processing device has a unique identifier and wherein the processor can only write transaction data to an IC card if the IC card memory (12) holds the same identifier.

2. A system according to claim 1, wherein the identifier comprises a serial number.

3. A system according to claim I or claim 2, wherein the IC card processing device includes a reading device for reading data relating to a customers details stored on a data carrier.

4. A system according to claim 3, wherein the reading device comprises a swipe reader (7).

5. A system according to any of the proceeding claims, wherein the device further includes a printing system (6) for printing transaction details on a record medium such as paper so as to provide a permanent record for the customer.

Fig.1

Fig.2

## Fig. 3

13 12

## Fig. 4

7 6 15

14

16 4

3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 341 951 (BENTON)<br>* abstract; claims 1-13; figures 1-11 *<br>— — — | 1-5 | G 07 F 7/10 |
| A | EP-A-0 316 689 (K. K. TOSHIBA)<br>* abstract; claims 1, 2, 5-8; figures 1-3 *<br>— — — | 1-4 | |
| A | US-A-4 724 527 (NISHIMURA ET.AL.)<br>* abstract; claims 1-9; figures 1, 7 *<br>— — — | 1-3 | |
| A | US-A-4 709 136 (WATANABE)<br>* abstract; claims 1, 2; figure 3 *<br>— — — | 1 | |
| D,A | US-A-4 804 825 (BITOH)<br>* the whole document *<br>— — — — — | 1 | |
| | | | TECHNICAL FIELDS SEARCHED (Int. Cl.5)<br><br>G 07 F |

The present search report has been drawn up for all claims

| Place of search | Date of completion of search | Examiner |
|---|---|---|
| The Hague | 06 December 90 | GUIVOL,O. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document